# EUROPEAN PATENT APPLICATION

(11) **EP 1 404 089 A1**
(43) Date of publication of application: **31.03.2004**
(21) Application number: 02360273.3
(22) Date of filing: 25.09.2002
(51) Int. Cl.: H04M 1/2745, H04Q 7/32, H04M 3/493, H04M 3/42

(54) **Method for managing a phone book of an end user terminal**

(71) Applicant: ALCATEL, 75008 Paris (FR)
(72) Inventor: Hägebarth, Frank, Dipl.-Ing., 74366 Kirchheim (DE)
(74) Representative: Dreiss, Fuhlendorf, Steimle & Becker

(57) **Abstract**

The invention refers to a method for managing a phone book of an end user terminal (1, 2, 3, 4) comprising the steps of:
- establishing a data link (5) from an input terminal (6) to a data processing unit (7) on which a centralized copy of the phone book of the end user terminal (1, 2, 3, 4) is hosted;
- transmitting a desired change of the phone book from the input terminal (6) to the data processing unit (7) across the data link (5);
- updating the centralized copy of the phone book according to the desired changes;
- transmitting (10) at least the changed parts of the centralized copy of the phone book from the data processing unit (7) to the end user terminal (1, 2, 3, 4); and
- synchronizing the phone book of the end user terminal (1, 2, 3, 4) with the centralized copy of the phone book.

## Description

The present invention refers to a method for managing a phone book of an end user terminal.

Furthermore, the invention refers to a data processing unit for carrying out the method for managing a phone book of an end user terminal.

Finally, the present invention refers to an end user terminal, preferably a telecommunication terminal, for carrying out the method.

In the state of the art end user terminals with a phone book are well known. The end user terminal, for example, is a telecommunication terminal, in particular a mobile phone or a smart phone, or a so-called personal digital assistant (PDA). If users use more than one end user terminal the user has to manage the phone books of the end user terminals one by one. This can cause an enormous fatigue. Furthermore, managing the phone books of the end user terminals one by one can provoke errors in one or more of the phone book. Usually, the phone book of an end user terminal is managed by the user using input means of the end user terminal. However, this can make the management of the phone book laborious and difficult.

In the past, various approaches have been presented to avoid these drawbacks. For example, telecommunication installations are known which have one centralized phone book. All end user terminals connected to this telecommunication installation have access to the centralized phone book.

Further, it is known from the state of the art that the phone books of mobile telecommunication terminals, capable of transmitting data, for example, according to the GSM- or the UMTS-standard, are stored on a SIM (subscriber identity module)-card and can be taken over into another end user terminal by simply inserting the SIM-card, on which the phone book is stored, into the other end user terminal. Equally, end user terminals of fixed telecommunication networks are known in the state of the art, which comprise a SIM-reader. Finally, for some mobile end user terminals interfaces such as a cable, infrared (IR), blue tooth, are available which allow the transmittal of the phone book from the end user terminals to a personal computer (PC) or to a personal digital assistant (PDA) for effecting desired changes of the phone book more easily. The changed copies of the phone book on the PC or the PDA can be transmitted back to the end user terminal across the available interface and the phone book of the end user terminal can be synchronized with the copy of the phone book received from the PC or PDA.

The EP 0 786 916 A1 discloses a method for performing the transfer of data between at least two user cards (SIM card) in a cellular radio communication system. The cards co-operate respectively with first and second terminals. The first terminal reads data which has been stored on the first user card and transfers it to the second terminal. The second terminal receives the data and then replaces the old data stores within the second user card with the data which has been received from the first user card. The transfer stage is preferably performed using a short message service (SMS) or a data transmission service. The described method allows update of information, in particular of phone book information, where a user operates two SIM cards, for example a card telephone and a mobile telephone on the same phone number.

However, the method for managing a phone book of an end user terminal described in the EP 0 786 916 A1 has the drawback that the phone book can only be managed from one of the end user terminals. It is therefore an object of the present invention to provide a standardized method for managing phone books in different end user terminals. At the same time the management should be as convenient as possible and the synchronization of the phone books of the different end user terminals should be effected automatically.

In order to solve these problems according to the present invention a method for managing a phone book of an end user terminal is suggested comprising the steps of:
- establishing a data link from an input terminal to a data processing unit on which a centralized copy of the phone book of the end user terminal is hosted;
- transmitting a desired change of the phone book from the input terminal to the data processing unit across the data link;
- updating the centralized copy of the phone book according to the desired change;
- transmitting at least the changed part of the centralized copy of the phone book from the data processing unit to the end user terminal; and
- synchronizing the phone book of the end user terminal with the centralized copy of the phone book.

An important aspect of the present invention is the fact that a centralized copy of the phone book of at least one end user terminal is hosted on a data processing unit. The data processing unit can be accessed by any person in possession of an appropriate user name and password from any input terminal which is capable of establishing a data link to the data processing unit. Desired changes of the phone book can be easily input by the input terminal and transmitted to the data processing unit across the data link. The data processing unit has means for checking whether the desired changes are performed by an authorized user. The changes of the phone book comprise changing phone book entries, adding new phone book entries or deleting existing phone book entries. The authorization for the desired changes can be verified by means of a user name and/or a password entered by the user who wants to effect the desired changes by means of the input terminal.

Furthermore, the data processing unit comprises means for updating the centralized copy of the phone book according to the desired changes. Further, at least the changed part of the centralized copy of the phone book is transmitted from the data processing unit to the end user terminal. If more than one end user terminal uses the centralized copy of the phone book, at least the changed parts of the centralized copy of the phone can be transmitted to all the end user terminals. Within the end user terminals the phone books are synchronized with the centralized copy of the phone book received from the data processing unit.

According to a preferred embodiment of the present invention it is suggested that the end user terminal is a telecommunication terminal, in particular a mobile telecommunication terminal. Alternatively, the end user terminal can be a personal digital assistant (PDA). Of course, the end user terminal can also be a combination of a telecommunication terminal and a personal digital assistant, a so-called smart phone.

According to another preferred embodiment of the present invention it is suggested that the input terminal is a personal computer terminal. The personal computer terminal is connected to the data processing unit by any kind of data transmission network, wireless and comprising a cable or wire.

Alternatively it is suggested that the input terminal is an end user terminal. According to this embodiment of the invention the desired changes of the phone book or inputted by means of an end user terminal. The desired changes are transmitted to the data processing unit, the centralized copy of the phone book is updated and at least the changed parts of the centralized copy of the phone book is transmitted to the end user terminals which use the same phone book as the end user terminal by means of which the desired changes were inputted.

According to yet another embodiment of the present invention it is suggested that said data link from said input terminal to said data processing unit is established across the Internet. This means that the input terminal as well as the data processing unit are connected to the Internet and are provided with appropriate means for transmitting data across the Internet and for receiving data from the Internet. The data processing unit hosts an Internet-website which can be entered by an authorized user. The website contains operating controls for conveniently managing the phone books. For example, the end user terminals, which are to receive at least the changed parts of the centralized copy of the phone books, can be defined on the website.

Furthermore, it is suggested that at least the changed part of the centralized copy of the phone book is transmitted from the data processing unit to the end user terminal by means of a data message service, preferably a short message service (SMS). Such a message service can be easily used for transmitting the changed parts of the centralized copy of the phone book to the end user terminals. The data processing unit is provided with means for creating the content of the SMS-message according to the changed parts of the centralized copy of the phone book and for transmitting the message to the end user terminals. The end user terminals are provided with appropriate means for receiving the SMS-message, with means for extracting at least the changed parts of the centralized copy of the phone book from the message and with means for synchronizing their phone books with the centralized copy of the phone book hosted in the data processing unit.

Finally, it is suggested that a confirmation message is transmitted from the data processing unit to the input terminal after the centralized copy of the phone book has been successfully changed. Of course, a confirmation message can be transmitted from the end user terminal to the data processing unit after the phone book has been successfully synchronized, too.

Furthermore, the present invention suggests a data processing unit comprising:
- means for establishing a data link to an input terminal;
- means for hosting a centralized copy of a phone book of an end user terminal,
- means for receiving a desired change of the phone book inputted at the input terminal and transmitted from the input terminal to the data processing unit across the data link;
- means for updating the centralized copy of the phone book according to the desired change; and
- means for transmitting at least the changed parts of the centralized copy of the phone book from the data processing unit to the end user terminal, where the phone book of the end user terminal is synchronized with the centralized copy of the phone book.

According to a preferred embodiment of the present invention it is suggested that said means for establishing a data link from said input terminal to said data processing unit establish the data link across the Internet.

According to yet another preferred embodiment of the present invention said means for transmitting at least the changed parts of the centralized copy of the phone book transmit at least the changed parts from the data processing unit to the end user terminal by means of a data message service, preferably a short message service (SMS).

It is further suggested that the data processing unit comprises means for transmitting a confirmation message from the data processing unit to the input terminal after the centralized copy of the phone book has been successfully changed.

Finally, the present invention refers to an end user terminal comprising:
- means for storing a phone book;
- means for inputting a desired change of the phone book;
- means for establishing a data link from the end user terminal to a data processing unit on which a centralized copy of the phone book of the end user terminal is hosted;
- means for transmitting the desired change of the phone book from the end user terminal to the data processing unit across the data link, where the centralized copy of the phone book is updated according to the desired change, and at least the changed parts of the centralized copy of the phone book being transmitted from the data processing unit to at least on further end user terminal, where at least the changed part of the centralized copy of the phone book is received and the phone book of the at least one further end user terminal is synchronized with the centralized copy of the phone book.

According to a preferred embodiment of the present invention it is suggested that at least the changed part of the centralized copy of the phone book is transmitted from the data processing unit to the end user terminal and the end user terminal further comprises:
- means for receiving at least the changed part of the centralized copy of the phone book from the data processing unit; and
- means for synchronizing the phone book of the end user terminal with the centralized copy of the phone book.

According to a another preferred embodiment of the present invention it is suggested that the end user terminal comprises means for transmitting a confirmation message from the end user terminal to the data processing unit after the phone book has been successfully synchronized.

Preferred embodiments of the present invention can be taken from the enclosed drawings and the following description of the drawings. All features described in the drawings, the description and the claims are part of the present invention.

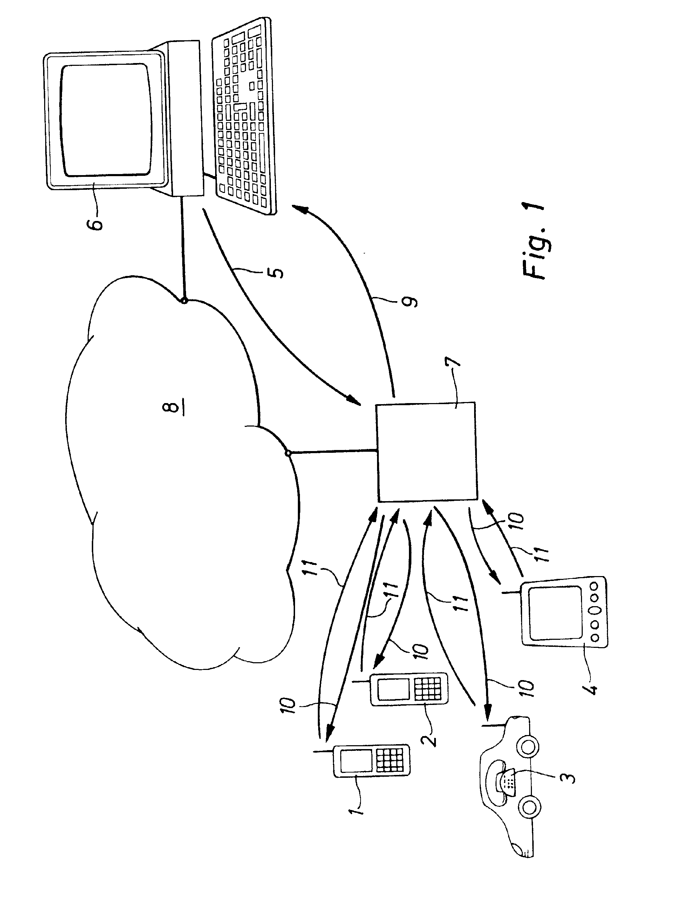

- Figure 1: shows means for realizing the method according to the present invention according to a first preferred embodiment,
- Figure 2: shows means for realizing the method according to the present invention according to a second preferred embodiment; and
- Figure 3: shows a flow chart of the method according to a preferred embodiment of the present invention.

The present invention refers to managing a phone book of an end user terminal 1, 2, 3, 4. The end user terminals 1 and 2 are conventional mobile telecommunication terminals (mobile phone) which can transmit data according to any standard. For example, the end user terminals 1, 2 can transmit data according to the GSM (global system mobile) or according to the UMTS (universal mobile telecommunication system)-standard. The end user terminal 3 is a mobile telecommunication terminal disposed and integrated within a car (car phone). The end user terminal 4 is a personal digital assistant (PDA) comprising means for a wireless data transmission. The phone books are stored within the end user terminals 1, 2, 3, 4 on any kind of storage media. For example, the storage media of the end user terminals 1, 2, 3, 4 could be a SIM (subscriber identity module)-card insertable into the end user terminals 1, 2, 3, 4, a read-only-memory (ROM), a random-access-memory (RAM), a flash-memory integrally disposed within the end user terminals 1, 2, 3, 4, or a hard disk (e.g. microdrive) integrally disposed within the end user terminal 1, 2, 3, 4.

According to the present invention a data link 5 is established from an input terminal 6 to a data processing unit 7 on which a centralized copy of the phone book of the end user terminals 1, 2, 3, 4 is hosted. For example, the data link 5 can be established across the Internet 8. The input terminal 6 is a personal computer (PC) comprising a display and a keyboard. The input terminal 6 is connected to the Internet 8. The data processing unit 7 is connected to the Internet 8, too. If the phone books of the end user terminals 1, 2, 3, 4 are to be changed, the desired changes are inputted into the input terminal 6, for example by means of the keyboard. The desired changes may comprise adding new phone book entries, deleting existing phone book entries and modifying existing phone book entries. There may be a website hosted on the data processing unit 7 accessable through the Internet 8. An authorized user may effect the desired changes by means of the website.

The desired changes of the phone books are transmitted from the input terminal 6 to the data processing unit 7 across the data link 5. The desired changes are received by the data processing unit 7 and the centralized copies of the phone books are updated according to the desired changes within the data processing unit 7. After successfully changing the centralized copy of the phone books within the data processing unit 7 a confirmation message 9 can be transmitted to the input terminal 6. The confirmation message 9 can be transmitted across the internet 8.

The changed parts of the centralized copy of the phone books can then be transmitted (10) from the data processing unit 7 to the end user terminals 1, 2, 3, 4. Alternatively, not only the changed parts of the centralized copy, but rather further parts of the centralized copy and even the whole centralized copy of the phone book can be transmitted (10) to the end user terminals 1, 2, 3, 4. The changed parts of the centralized copy or the centralized copy are transmitted (10) from the data processing unit 7 to the end user terminals 1, 2, 3, 4 by means of a data message service, preferably a short message service (SMS).

Within the end user terminals 1, 2, 3, 4 the phone books are synchronized with the centralized copy of the phone bocks. The end user terminals 1, 2, 3, 4 are equipped with means for extracting at least the changed parts of the centralized copy from the data message received from the data processing unit 7. Furthermore, the end user terminals 1, 2, 3, 4 are equipped with means for automatically changing the phone books according to the changed parts of the centralized copy of the phone books. After the phone books of the end user terminals 1, 2, 3, 4 have successfully been synchronized, confirmation messages 11 can be transmitted from the end user terminals 1, 2, 3, 4 to the data processing unit 7 and/or to the input terminal 6.

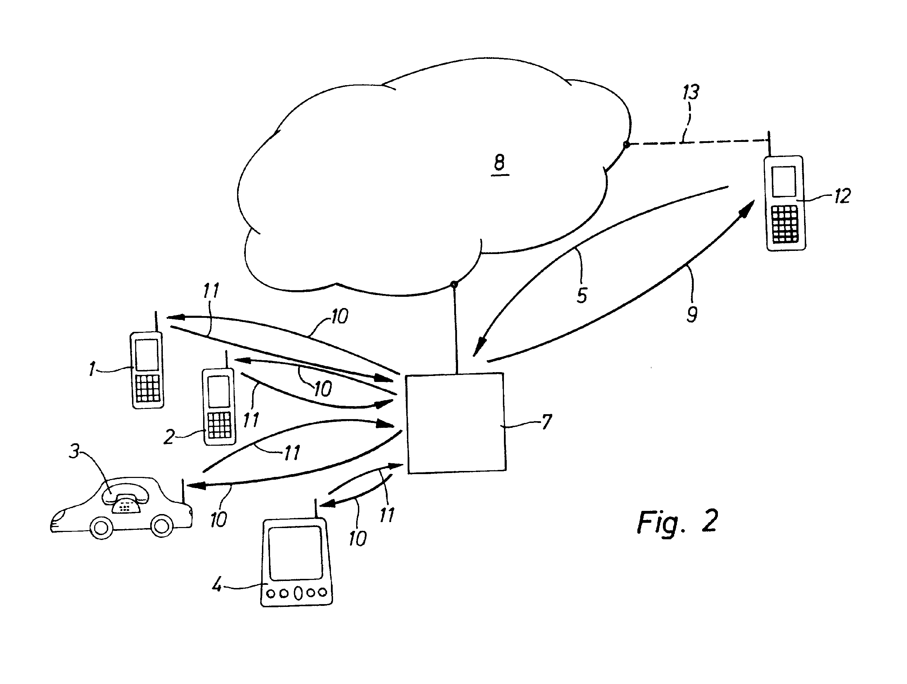

Figure 2 shows a second embodiment of means for realizing the method according to the present invention. In the embodiment shown in Figure 2 the input terminal is a further end user terminal 12 which is connected to the internet 8 by means of a wireless data transmission connection 13. The further end user terminal 12 has storage means for storing the phone book. The desired changes of the phone book are inputted into the further end user terminal 12 by means of a keyboard of the end user terminal 12. The desired changes of the phone book are transmitted to the data processing unit 7 across the data link 5 established across the internet 8.
A user inputting the desired changes of the phone book has access to the data processing unit 7 across the internet 8 only if he enters his user name and/or password and the user name and/or password has been positively identified by the data processing unit 7. The data processing unit 7 has the addresses of the end user terminals 1, 2, 3, 4 for transmitting at least the changed parts of the centralized copy of the phone book to the end user terminals 1, 2, 3, 4 across the data link 10. The addresses of the end user terminals 1, 2, 3, 4, for example, are telephone numbers of the end user terminals 1, 2, 3, 4 for transmitting the SMS-messages. For detecting SMS-messages containing changed parts of the centralized copy of the phone book the end user terminals 1, 2, 3, 4 can detect the address of the data processing unit 7 or a code transmitted together with the SMS message.

If a conflict between the desired changes of the phone books and the data already stored in the phone books occurs, the end user terminals 1, 2, 3, 4 can automatically create a data message containing a respective error message and can transmit the error message to the data processing unit 7. If no conflict or error occurs and the data in the centralized copy of the phone books was appropriately stored, the end user terminals 1, 2, 3, 4 generate the confirmation message 11 containing an acknowledgement and transmit the acknowledgement to the data processing unit 7.

In case of conflict or error an appropriate message is displayed on the website of the data processing unit 7 which is accessed by the input terminals 6, 12 across the internet 8. The displayed message gives the user the opportunity to correct the desired changes of the phone book the next time he visits the website of the data processing unit 7. Besides the convenient entry and maintenance of the telephone book entries by means of the described website, it is further possible, to enter the desired changes to the telephone book directly by means of the further end user terminal 12. Instead of transmitting the desired changes to the data processing unit 7 across the internet 8, it is also possible that the further end user terminal 12 creates a data message, preferably a SMS message, containing the desired changes, which is transmitted to the data processing unit 7. According to this embodiment, it is not necessary that the further end user terminal 12 and the data processing unit 7 are connected to the internet 8. Instead, the further end user terminals 12 and the data processing unit 7 must have access to a wireless telecommunication network for transmitting the data messages. The software running on the data processing unit 7 automatically detects the address of the transmitting further end user terminal 12 or an appropriate code within the data message received from the end user terminal 12, and can determine whether the user is authorize to effect changes of the phone books by means of the further end user terminal 12. If the user is authorized to effect the desired changes, the software running on the data processing unit 7 effects an update of the centralized copy of the phone books hosted on the data processing unit 7. Additionally, the software of the data processing unit 7 creates the data messages and transmits them to all specified end user terminals 1, 2, 3, 4, which use the same phone book.

If the modification of the copy of the phone books hosted in the data processing unit 7 was successful (there were no conflicts) and if the confirmation messages 11 from all end user terminals 1, 2, 3, 4 have all been received, the software of the data processing unit 7 creates a confirmation message and transmits it to the further end user terminal 12, which initiated the changes of the phone books. In case of an conflict or error, appropriate error messages are created and transmitted to the further end user terminal 12.

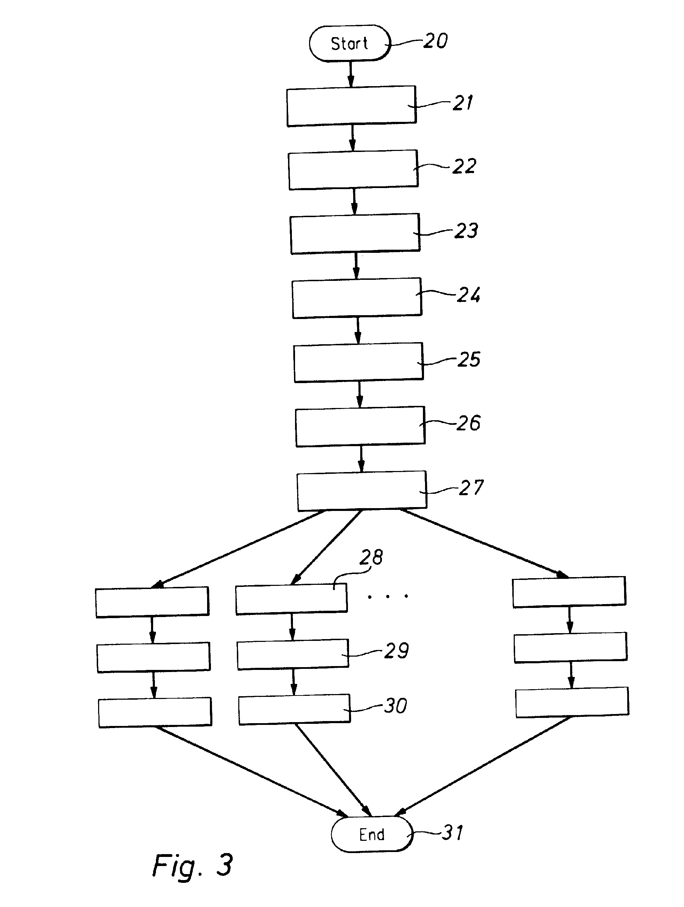

The flow chart shown in figure 3 begins with step 20. In step 21 the data link 5 is established between the data input terminal 6 and the data processing unit 7. In step 22 the desired changes are inputted into the data input terminal 6. In step 23 the desired changes are transmitted to the data processing unit 7 across the data link 5. In step 24 the desired changes are received by the data processing unit 7.

In step 25 the centralized copy of the phone books hosted in the data processing unit 7 is updated according to the desired changes. If updating the centralized copy was successful, in step 26 a confirmation message 9 is transmitted to the data input terminal 6.

In step 27 the changed parts of the centralized copy of the phone books or the whole centralized copy are transmitted (10) from the data processing unit 7 to the end user terminals 1, 2, 3, 4. In steps 28 the changed parts of the centralized copy or the whole centralized copy is received by the end user terminals 1, 2, 3, 4. In steps 29 the phone books stored in the end user terminals 1, 2, 3, 4 are synchronized with the updated centralized copy of the phone books. If synchronizing the phone books was successful, in steps 30 confirmation messages 11 are transmitted to the data processing unit 7. In step 31 the method according to the present invention ends

## Claims

1. Method for managing a phone book of an end user terminal (1, 2, 3, 4) comprising the steps of:
- establishing a data link (5) from an input terminal (6, 12) to a data processing unit (7) on which a centralized copy of the phone book of the end user terminal (1, 2, 3, 4) is hosted;
- transmitting a desired change of the phone book from the input terminal (6, 12) to the data processing unit (7) across the data link (5);
- updating the centralized copy of the phone book according to the desired change;
- transmitting (10) at least the changed part of the centralized copy of the phone book from the data processing unit (7) to the end user terminal (1, 2, 3, 4); and
- synchronizing the phone book of the end user terminal (1, 2, 3, 4) with the centralized copy of the phone book.

2. Method according to claim 1, **characterized in that** the end user terminal (1, 2, 3, 4) is a telecommunication terminal.

3. Method according to claim 1, **characterized in that** the end user terminal (1, 2, 3, 4) is a personal digital assistant (PDA).

4. Method according to one of the claims 1 to 3, **characterized in that** the input terminal (6) is a personal computer terminal.

5. Method according to one of the claims 1 to 3, **characterized in that** the input terminal (12) is an end user terminal.

6. Method according to one of the claims 1 to 5, **characterized in that** said data link (5) from said input terminal (6) to said data processing unit (7) is established across the Internet (8).

7. Method according to one of the claims 1 to 6, **characterized in that** at least the changed part of the centralized copy of the phone book is transmitted from the data processing unit (7) to the end user terminal (1, 2, 3, 4) by means of a data message service, preferably a short message service (SMS).

8. Method according to one of the claims 1 to 7, **characterized in that** a confirmation message (9) is transmitted from the data processing unit (7) to the input terminal (6) after the centralized copy of the phone book has been successfully changed.

9. Method according to one of the claims 1 to 8, **characterized in that** a confirmation message (11) is transmitted from the end user terminal (1, 2, 3, 4) to the data processing unit (7) after the phone book has been successfully synchronized.

10. Data processing unit (7) comprising:
- means for establishing a data link (5) to an input terminal (6);
- means for hosting a centralized copy of a phone book of an end user terminal (1, 2, 3, 4);
- means for receiving a desired change of the phone book inputted at the input terminal (6) and transmitted from the input terminal (6) to the data processing unit (7) across the data link (5);
- means for updating the centralized copy of the phone book according to the desired change; and
- means for transmitting at least the changed part of the centralized copy of the phone book from the data processing unit (7) to the end user terminal (1, 2, 3, 4), where the phone book of the end user terminal (1, 2, 3, 4) is synchronized with the centralized copy of the phone book.

11. Data processing unit (7) according to claim 9, **characterized in that** said means for establishing a data link (5) from said input terminal (6) to said data processing unit (7) establish the data link across the Internet (8).

12. Data processing unit (7) according to claim 9 or 10, **characterized in that** said means for transmitting at least the changed part of the centralized copy of the phone book transmit at least the changed part from the data processing unit (7) to the end user terminal (1, 2, 3, 4) by means of a data message service, preferably a short message service (SMS).

13. Data processing unit (7) according to one of the claims 9 to 11, **characterized in that** the data processing unit (7) comprises means for transmitting a confirmation message (9) from the data processing unit (7) to the input terminal (6) after the centralized copy of the phone book has been successfully changed.

14. End user Terminal (12) comprising:
- means for storing a phone book;
- means for inputting a desired change of the phone book;
- means for establishing a data link (5) from the end user terminal (12) to a data processing unit (7) on which a centralized copy of the phone book of the end user terminal (12) is hosted; and
- means for transmitting the desired change of the phone book from the end user terminal (12) to the data processing unit (7) across the data link (5), where the centralized copy of the phone book is updated according to the desired change, and at least the changed part of the centralized copy of the phone book being transmitted from the data processing unit (7) to at least one further end user terminal (1, 2, 3, 4), where at least the changed part of the centralized copy of the phone book is received and the phone book of the at least one further end user terminal (1, 2, 3, 4) is synchronized with the centralized copy of the phone book.

15. End user Terminal (12) according to claim 14, **characterized in that** at least the changed part of the centralized copy of the phone book is transmitted from the data processing unit (7) to the end user terminal (12) and the end user terminal (12) further comprises:
- means for receiving at least the changed part of the centralized copy of the phone book from the data processing unit (7); and
- means for synchronizing the phone book of the end user terminal (1, 2, 3, 4) with the centralized copy of the phone book.

16. End user terminal (12) according to claim 14 or 15,
**characterized in that** the end user terminal (12; 1, 2, 3, 4) comprises means for transmitting a confirmation message from the end user terminal (12; 1, 2, 3, 4) to the data processing unit (7) after the phone book has been successfully synchronized.
